# EUROPEAN PATENT APPLICATION

(11) **EP 1 538 585 A1**
(43) Date of publication of application: **08.06.2005**
(21) Application number: 04380034.1
(22) Date of filing: 13.02.2004
(51) Int. Cl.: G09B 9/26

(54) **Simulator of the operation of a navigation system for vehicles**

(30) Priority: 03.12.2003 ES 200302844
(71) Applicant: Kenwood Iberica, S.A., 08020 Barcelona (ES)
(72) Inventor: Brunet Llobet, José, 08020 Barcelona (ES); Del Molino Salmeron, Francisco, 08020 Barcelona (ES)
(74) Representative: Canadell Isern, Roberto

(57) **Abstract**

It includes a navigation unit formed by electronic circuits mounted on a rotating platform associated to a control steering wheel, a support formed by a rotor associated to the rotating platform and a stator attached to a console in which the device is located, a frequency-regulated oscillator, an infrared sensor, a microphone and/or headphone and a loudspeaker. The console has an interactive indicating screen, outlets for the microphone and loudspeaker and the control steering wheel on the outside.

It is intended to imitate the way of operating vehicle orientation equipment by satellite signals and self-generated signals.

## Description

### FIELD OF THE INVENTION

This invention refers to a simulator of the operation of a navigation system for vehicles.

As expressed in the title, this is a functional set of devices intended to imitate the way a piece of orientation ("navigation") equipment for vehicles operates. This set is especially intended to be used in establishments dedicated to the promotion and sales of orientation equipment, commonly called navigation, in relation to demonstrations of how the equipment works and its applications for possible purchasers and/or users.

### HISTORY

At present there exhibit stands intended to show the orientation equipment for vehicles (navigation systems that use the signals received from the GPS satellite network in orbit around the earth, the speed pulses of the vehicle and a data base on the map of an incorporated support (DVD, CD, HDD and others).

These exhibit stands are basically static or passive, in the sense they only serve to exhibit the orientation equipment without permitting the interactivity obtained during driving. At the most, they are usually connected to an electrical supply source of the indication screen but not under interactive operating conditions. In this way, the possible users and/or purchasers of a piece of orientation equipment by satellite cannot get an exact idea of the possibilities and advantages of including equipment of this kind in their vehicles and the sales establishments often lose the promotion opportunities of said devices.

Therefore, it is necessary that the manufacturers and distributors of navigation equipment for land and water vehicles to count on a device which can show all the possibilities and advantages of said orientation means under conditions considered to be real in an exhibition or sales establishment.

### BRIEF DESCRIPTION OF THE INVENTION

This is a device provided with technical means that permit exact reproduction or in a way exactly equivalent to autonomous circulation conditions (without GPS signals) of a vehicle provided with satellite orientation equipment, in order that a possible future user can become familiar with it and experiment the guidance and voice assistance whilst driving. In this regard, the new device has a steering wheel the same as that of a vehicle allowing the movements normally carried out by a driver when driving a car or boat to be imitated. Whilst handling this device, the user reproduces the signals which, coming from the speed pulses of the wheels, are received by the navigator when there is no satellite coverage and are interpreted as coming from a real moving vehicle.

In this way, the interested party can experiment the same sensations and receive the same advantages as regards orientation and voice guidance as if he/she were really driving a vehicle provided with navigating equipment. The indicating screen or monitor, the warning devices (loudspeakers) and control (microphone) and other elements of the equipment mounted in vehicles are also included in the new device, in its operating conditions, in other words, a true functional simulation is obtained.

In order to facilitate the explanation of this description attached are drawings in which a preferred performance of a simulator of the operation of a navigation system for vehicles are represented in an illustrative but not limiting way, according to the principles of the claims.

### BRIEF DESCRIPTION OF THE DRAWINGS

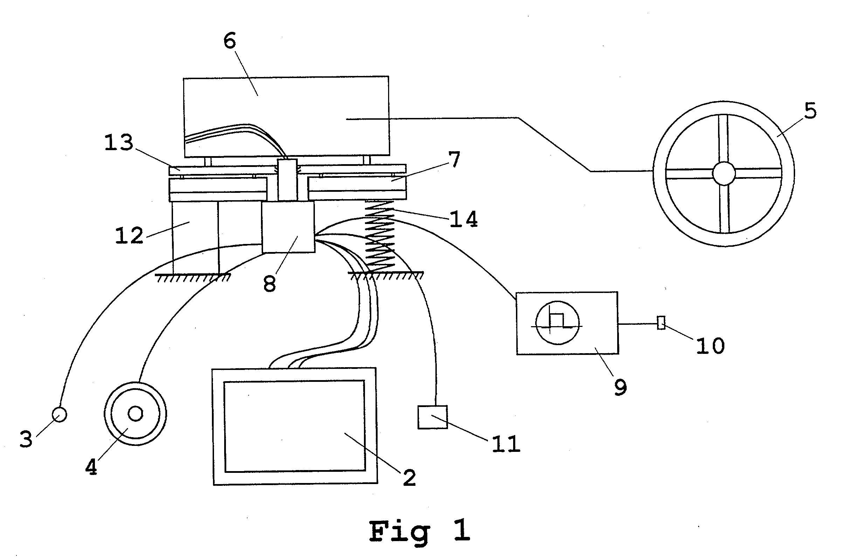

Figure 1 is a block diagram illustrating the composition and functional structure of the new simulator.

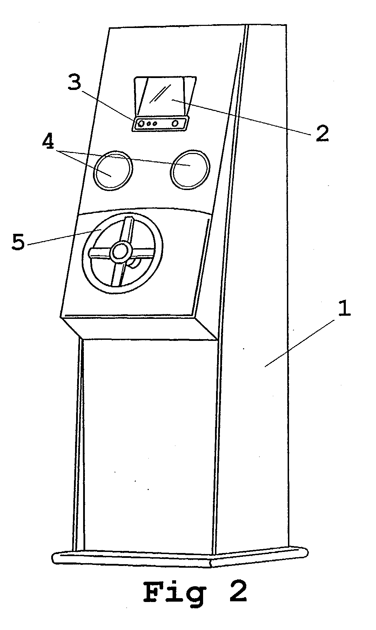

Figure 2 is a perspective front and side view of the new device.

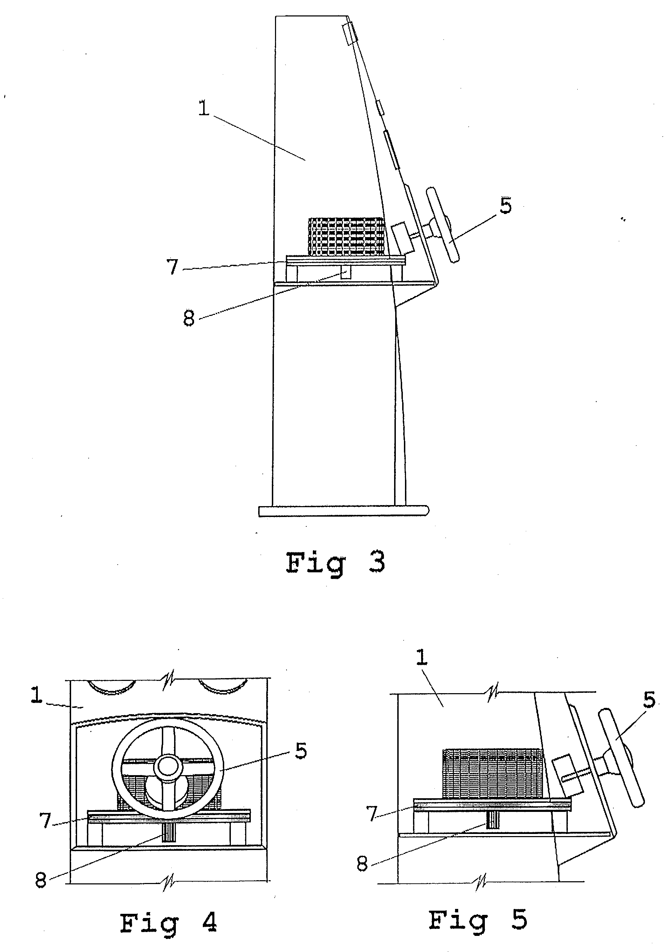

Figure 3 is a side and section view of the device and figures 4 and 5 are enlarged details of its components.

### DETAILED DESCRIPTION OF THE INVENTION

The elements numbered in the drawings correspond to the parts indicated below.

The new device is mounted on a console-type piece of furniture 1 (to be attached to the floor) or, alternately, a table and includes an interactive indicator screen 2 of the type used for satellite-assisted "navigation", a voice control device 3, a pair of loudspeakers 4 and a steering wheel 5 corresponding to that of a vehicle. These are the exterior elements of the device that a future user of the orientation equipment would use during the assisted navigation test.

The new device has the following elements on its inside:
A navigation unit 6 formed by electronic circuits, internally provided with a rotating sensor and amounted on a horizontal and turning platform 7 mechanically coupled to the steering wheel 5.
A support 8 for the platform 7, formed by a rotor integral with the latter and a stator attached to the furniture 1 by means of fixed wooden base 12.
An oscillator 9 controlled by voltage or another electric variable.
An adjustment device 10 of the oscillator frequency (for simulated variation of the vehicle's speed).
An infrared sensor 11 with remote control for remote control of the navigator.

Coupling between the steering wheel 5 and the rotating platform 7 is carried out mechanically due to friction with bearings.

The rotating platform 7 has a sandwich shape (two juxtaposed discs with intermediate bearings for free rotation with very low friction) and its angular movement has no limit. The lower part is attached to the wooden support 12 and, in turn, to the piece of furniture 1 of the device. The upper part 13 of the platform 7 is attached to the rotor of the support 8 where the navigation unit 6, as already said, is located. It is this upper part that is mechanically coupled to the steering wheel 5.

The emergent wiring of the unit 6 and coming from the interior circuits is connected to sliding contact metallic rings (called slip rings in the specialty) that ensure constant electrical contact between the rotor and the stator of the support 8 and facilitate free rotation of the navigator 6 mounted on the rotating platform 7. The stator should not perform any mechanical effort.

The microphone 3 permits voice control of the navigator circuits, and the loudspeakers 4 issue the information required by the user of the navigation equipment to drive the suitably vehicle in accordance with the characteristics of the route in question.

A spring 14 applies an ascending force on the inside face of the rolling platform 7, ensuring optimum contact with the coupling bearing of the steering wheel 5.

## Claims

1. Simulator of the operation of a navigation system for vehicles, intended to imitate the way satellite-orientation equipment operates, **characterized by** the fact it includes a functional set of electronic and electromechanical devices made up of:
A navigation unit (6) formed by electronic circuits and mounted on
A horizontal and rotating platform (7) mechanically coupled by friction and on bearings with
A steering wheel (5) corresponding to the steering wheel of a real vehicle;
A support (8) for the rotating platform (7) and formed by a rotor integral with the platform and a stator attached to the body of the device;
An oscillator (9) regulated in frequency by a adjustment device (10) for simulation of the vehicle's speed variations;
An infrared sensor (11) for remote control of the navigation unit and its rotation;
A microphone (3) for voice control of the navigation unit by the user;
At least one loudspeaker and/or headphones (4) for receiving voice instructions relating to the simulated route to be followed by the vehicle;
A case-shell (1) having an exterior outlet for an interactive indicating screen (2), the control and instruction microphone (3) and loudspeaker (4), and the steering wheel (5).

2. Simulator of the operation of a navigation system for vehicles, according to claim 1, **characterized by** the fact the coupling between the rotor and stator of the support (8) of the rotating platform includes a number of slip rings ensuring continuous transmission of the incoming and outgoing signals of the navigation unit (2) for any position of the rotating platform.

3. Simulator of the operation of a navigation system for vehicles, according to claims 1 and 2, **characterized by** the fact that control of the oscillator (9) frequency generating the simulated speed variations of the vehicle is controlled by an electric variable, such as supply voltage.
